# EUROPEAN PATENT APPLICATION

(11) **EP 2 333 474 A2**
(43) Date of publication of application: **15.06.2011**
(21) Application number: 10466031.1
(22) Date of filing: 07.12.2010
(51) Int. Cl.: F28D 20/02, F24F 7/00

(54) **Heat accumulating module with PCM, module's assembly and double heat accumulating wall**

(30) Priority: 11.12.2009 CZ 20090834
(71) Applicant: Vysoké Ucení Technické V Brne, 601 90 Brno (CZ)
(72) Inventor: Ostry, Milan, 613 00 Brno (CZ)
(74) Representative: Malusek, Jiri

(57) **Abstract**

Heat accumulation module based on phase change materials, comprising the casing (2), wherein the casing (2) consists from the rear wall (3), the side wall (4) and the flange (5), the latter carrying the cavity plate (6) arranged thereon in a fixed position, thus creating the air duct (10) extending between the rear wall (3) of the casing (2) and the inner wall (9) of the cavity plate (6), the cavity plate (6) is provided with a silicone sealing strip (13) extending along the side of the cavity plate (6), where the cavities (6a) of the same have their open ends, and adjoining to the flange (5), the cavities (6a) of the cavity plate (6) being filled with a phase change material. The corresponding modular heat accumulation assembly then consists of the lower module (1), at least one intermediate module (1a) and the upper module (1b), the lower module being provided with the lower outlet branch (11) and the upper module (1b) being provided with the upper outlet branch (12), the conduits connected to the outlet branches (11, 12) being led out of the room, the at least one intermediate module (1a) having both the top and the bottom side of its casing (2) open, the lower module (1) having only the top side of its casing (2) open and the upper module (1b) having only the bottom side of its casing (2) open, the boundary zone of the jointing area of one of the modules (1, 1a, 1b) being adapted to form the coupling element for attaching a subsequent module and the air ducts (10) of the modules (1, 1a, 1b) being interconnected. The double heat accumulating wall has its rear wall designed in the form of the load-carrying wall (20) and its front facing wall is formed by the cavity wall (19) having its cavities (23) filled with a phase change material, the rear load-carrying wall (20) being on its side facing to the cavity wall (19) provided with the reflective foil (28) eliminating the intrusion of vent air into the building structure, the walls (19, 20) being separated by load-carrying profiles (27) and partitions (25) arranged between the former and creating the path (26) for the uniform flow of vent air through the interspace (24) of the double wall, the interspace (24) being in turn connected to inlet and outlet conduits (21, 22) of the air-conditioning system (18) and having its periphery closed with covering strips.

## Description

### Field of the invention

The invention relates to heat accumulation modules based on phase change materials, in particular those for stabilizing the room temperatures and preventing overheating of the residential premises and workplaces during summer seasons.

The invention further relates to a double heat accumulating wall comprising a heat accumulation core, which is activated by means of an air-conditioning system, which activation, or discharging, of the heat accumulation core is ensured by a separate air circuit operating in the night-time, the inlet temperature of said air circuit being adjustable by machine cooling. Such heat accumulating wall is utilizable for passive cooling of the residential premises in the daytime during summer seasons.

### Description of the prior art

Nowadays, the increasing proportion of buildings made of lightweight structural materials poses one of the main trends in the domestic construction industry. In this connection, not only the development of new civil and housing projects is concerned since a significant portion of the realized building contracts is constituted by superstructures and garrets. The sheathing structures consisting of lightweight structural materials find their application especially in those instances where the is exerted an increased effort to unload the supporting building structures and to ensure enhanced heat-insulation properties of the sheathing structures having reduced thicknesses. It is a matter of course that during the use of the buildings comprising such sheathing structures made of lightweight structural materials, the latter must not adversely affect the interior microclimate. This concern is due to the fact that the reduced heat accumulation capacity of the lightweight building structures results in overheating inside the residential premises and workplaces during summer seasons

The accumulation of the heat energy with making use of the internal latent heat is possible in those materials which transit from one state of matter to another when the an appropriate temperature or temperature range is achieved. In terms of the construction applications, the transition solid matter - liquid and vice versa may be taken into account. The accumulation of the internal latent heat is one of the typical properties of the so called Phase Change Materials (hereinafter also referred to as PCMs) that may find a wide scope of applications in the building structures, thus enhancing the heat accumulation capacity of the same without increasing their weight.

The phase change materials, which are typically accommodated in a sheet-metal envelope, are initially warmed up to the fusion point, which is the prerequisite for the phase change to occur. The progression of phase change is accompanied by the significant consumption of energy that is extracted by such materials from the environment. After the transition from the solid state of matter into the liquid one, such substances are able to absorb the heat energy through the process of calorifying the liquid matter.

Since the heat accumulation is based on the phase change, it is essential to ensure the stability of the PCMs in all the states of matter. This results in the requirement for keeping the phase change materials encapsulated when used in the building structures. Such encapsulation must unconditionally ensure that the phase change materials used are hermetically sealed inside an metallic or polymeric enclosure and the same are prevented from being released into the surrounding structure.

The most common applications are as follows:

Bags or cushions made of a polymeric or metallic foil and filled with the PCMs; such panels are disclosed e.g. in EP 1 703 033 A1.

The PCMs that are encapsulated inside metallic or plastic panels; a similar panel is disclosed in WO 03/064931 A1, wherein the envelope filled with the phase change material adjoins to an underlying sound-insulating layer through which heating tubes may be led. Again, the document US 2009/0223160A1 discloses a panel wherein the envelope is filled with agglomerated phase change materials that are distributed in a plurality of separate layers.

The PCMs that are enclosed inside the spherical bodies having polymeric coatings; such spherical bodies are disclosed in EP 0122198.

Furthermore, the disclosures of the PCMs, that are filled in tubes or tubular assemblies, can be found in EP 0034710 or EP 0011411.

The PCMs may also be provided in the form of polymeric microcapsules that are suitable for the application in plasters or building panels. The application of such enclosed PCMs is also disclosed in the above documents constituting the prior art. The document US 20059/0055982 A1 disclosed a building panel wherein the envelope is filled with the phase change materials that are enclosed in microcapsules.

The EP 0981 675 B1 discloses another embodiment wherein the envelope of the panel is filled with the topping layer consisting of the first phase change material, which adjoins to the cellar of the panel, and with the underlying layer consisting of the second material, which is different from the first one, the fusing point of the first material being higher than crystallization temperature of the second material. Nevertheless, none of the above solutions is applicable to solve the problem relating to deformation of the panels caused by molten material inside the same.

The bags or cushions containing PCMs are typically arranged in the horizontal position. This enables such elements to find their application in the assemblies of suspended ceilings or between the ceiling joists of the lightweight prefabricated wooden structures. The above bags may also be installed within special concrete slabs that are reinforced with glass fibres. Such elements are especially suitable for being used in ceiling structures. The most typical building materials comprising integrated microcapsules are gypsum plasterboards or fibreboards.

Another field of application pose the floor tiles that are manufactured by admixing the encapsulated PCMs to the base material. Another application, which was subjected to testing, is based on the use of microcapsules dispersed within the plaster mortar covering the inward faces of the gypsum plasterboards, thus enhancing the heat accumulation capacity of the same.

Usually, the accumulated latent heat predominates but the perceivable heat may also constitute a considerable portion of the total accumulated energy. The accumulation of the latent heat is particularly advantageous when higher levels of the accumulation capacity are envisaged since it enables to reduce the size and weight of the heat accumulation elements used.

The structural elements or building components containing PCMs may be successfully incorporated into the materials used for sheathing structures, such as gypsum plasterboards, wood-cement chipboards or particle boards, or for concrete and ceramic wear floor finishes. When incorporated in the sheathing structures, the PCMs significantly enhance the heat accumulation capacity of the same. Thus, such sheathing structures may improve the thermal stability of the interiors without requiring any complex air-conditioning or cooling systems to be installed. In addition, the thermal energy accumulated in the daytime may be led back into the interiors when the PCMs are discharged in the nighttime, thus saving the heating costs during transition seasons.

In general, the PCMs may be directly incorporated in building structures, such as upright load-bearing and siding structures, horizontal load-bearing, suspended ceilings or floor structures.

The achievements in the technological field of thermal energy accumulation using the internal latent heat of the phase change materials are based on the development and production of modular and closed heat accumulation subsystems that are suitable for the simple direct incorporation into building structures. The required degree of modularity, however, is not always achievable and so there is a plurality of products containing a certain amount of phase change materials that are difficult to be incorporated into sheathing structures. This, e.g., applies to the bag-shaped panels made of sheet aluminum and filled with cushion-like PCM bodies since these panels require to be covered with plasterboards when being installed in suspended ceilings, such plasterboards reducing the heat transfer from the interior compartments into the accumulation medium. Notwithstanding that such aluminum panels filled with PCMs provide the advantage of the highly conductive casing, they are not directly applicable without being covered with a soffit substructure which makes them inexpedient from the architectural point of view.

Accordingly, the gypsum plasterboards or plaster mortars with dispersed PCMs contain a considerable amount of matrix, i.e. gypsum, having low thermal conductivity and thus inhibiting the heat transfer into the accumulation medium.

Taking advantage of the accumulation capacity of sheathing structures is only possible when the heat absorption by the sheathing structures in the daytime and the heat removal from the same in the nighttime are appropriately ensured. This, however, cannot be guaranteed for the majority of applications where the discharge of the accumulated energy is only carried out through the ventilation of the respective interior space. Under such circumstances, the heat accumulation capacity of the phase change materials rapidly decreases because the accumulated energy cannot be extracted and the interior temperature does not drop below the point, which is required for the solidification of the accumulation medium, in the nighttime.

Despite of all that, the implementation under practical operating conditions showed that if the ambient air temperature is above the solidification point of the PCMs in the nighttime, the solidification, i.e. the crystallization, will not occur which results in a considerable reduction of the system efficiency.

The objective of the present invention is to present a heat accumulation module based on phase change materials and to create a sheathing structure incorporating such modules which will enable to provide an appropriate way of heat absorption by such structures in the daytime and heat removal from the same in the night time.

Another objective of the technical solution is to present a double heat accumulating wall comprising a heat accumulation core which is activated by means of an air-conditioning unit, which wall should comprise an assembly consisting of the heat accumulation modules based on phase change materials and ensuring the admission of air having the temperature that is required for the removal of the accumulated energy from the phase change material used.

### Brief description of the drawings

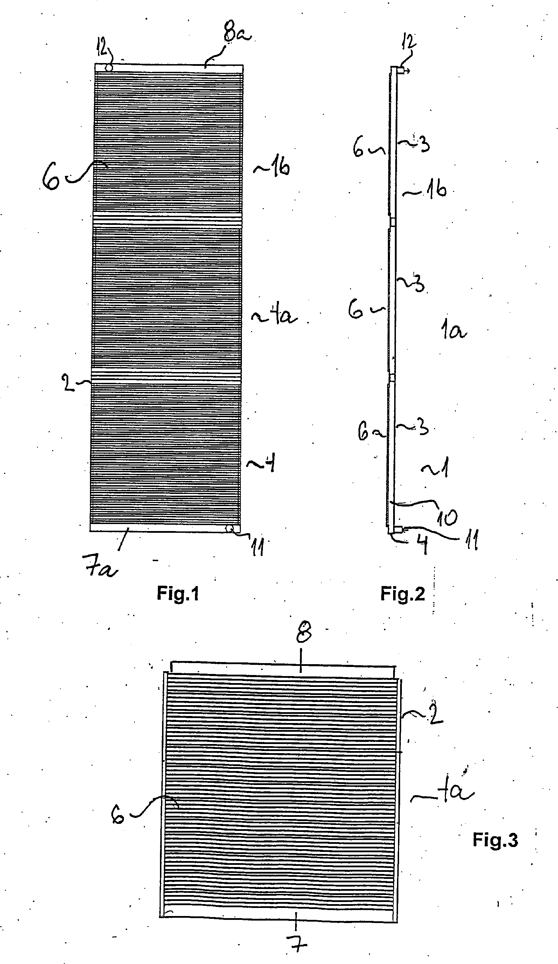

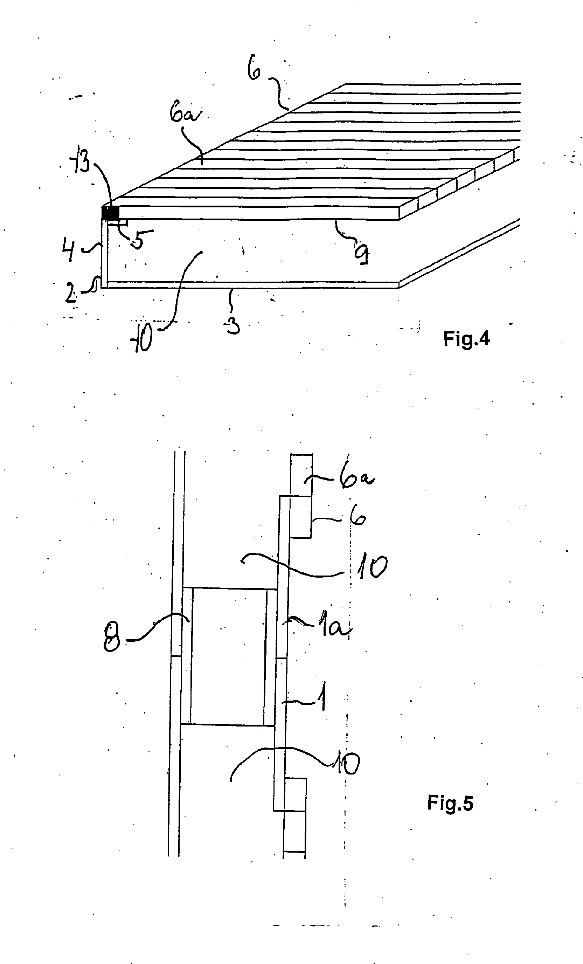

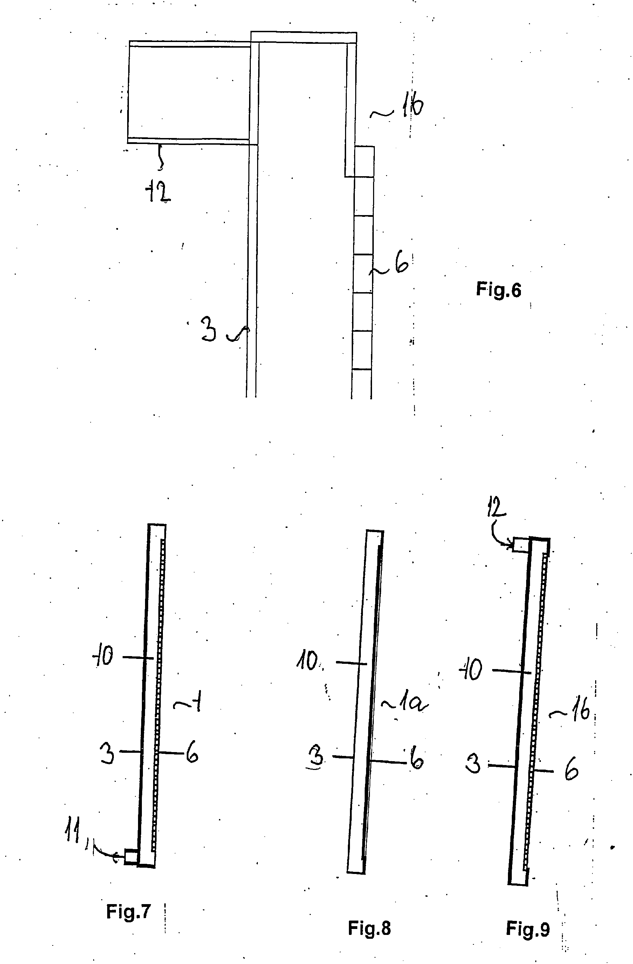

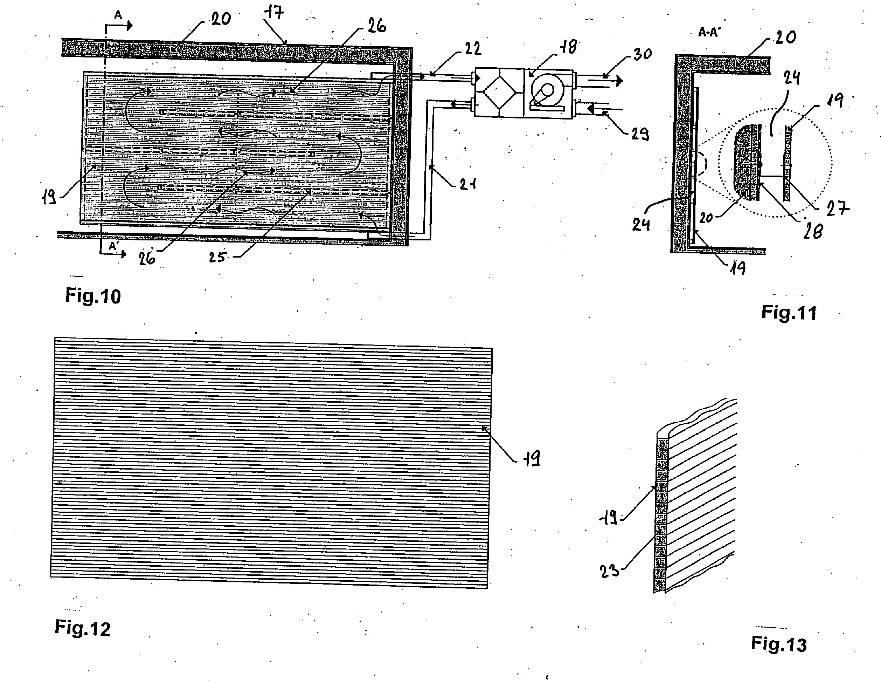

[0024] The invention will be further explained with reference to the accompanying drawings, wherein Fig. 1 shows an assembly comprising a plurality of the modules according to the invention, Fig. 2 shows the modular assembly of Fig. 1 in a schematic side view, Fig. 3 shows the intermediate module of the assembly of Figs. 1 and 2 in a front view, Fig. 4 shows the module according to the invention in a schematic sectional view, Fig. 5 shows the jointing area of the modules in a schematic sectional view, Fig. 6 shows the outlet branch of the upper module in a schematic auxiliary view, Fig. 7 shows the lower module in a sectional view, Fig. 8 shows the intermediate module of Fig. 3 in a sectional view, Fig. 9 shows the upper module of the assembly in a sectional view, *Fig. 10* *shows the double heat accumulation wall according to the invention in a schematic view,* *Fig. 11* *shows a detail of the arrangement of the double wall structure of* *Fig. 10* *in the sectional view A-A,* *Fig. 12* *shows a front view of the cavity wall panel and* *Fig.* 13 *shows* a *detail of the cavity wall of* *Fig. 12**.*

### Disclosure of the invention

The above drawbacks are largely eliminated by the heat accumulation module based on phase change materials according to the invention, wherein the casing of the module consists from a rear wall, a side wall and a flange, the latter carrying a cavity plate arranged thereon in a fixed position, thus creating an air duct extending between the rear wall of the casing and the inner wall of the cavity plate, and wherein the cavity plate is provided with a silicone sealing strip extending along the side of the cavity plate, where the cavities of the same have their open ends, and adjoining to the flange, the cavities of the cavity plate being filled with a phase change material.

Modular assembly consisting of the heat accumulation modules according to invention includes a lower module, at least one intermediate module and an upper module), the lower module being provided with a lower outlet branch and the upper module being provided with an upper outlet branch, the conduits connected to the outlet branches being led out of the room, the at least one intermediate module having both the top and the bottom side of its casing open, the lower module having only the top side of its casing open and the upper module having only the bottom side of its casing open, the boundary zone of the jointing area of one of the modules being adapted to form the coupling element for attaching a subsequent module and the air ducts of the modules being interconnected.

In a preferred embodiment, the coupling element is designed in the form of a socket piece.

Another feature of the invention is the double heat accumulating wall comprising the heat accumulation modules based on phase change materials according to invention arranged in the form of a heat accumulation core, which is activated by means of an air-conditioning system, wherein the front face of the double wall consists of a cavity wall having its cavities filled with a phase change material and the rear load-carrying wall is on its side facing to the cavity wall provided with a reflective foil eliminating the intrusion of vent air into the building structure, said walls being separated by load-carrying profiles and partitions arranged between the former and creating the path for the uniform flow of vent air through the interspace of the double wall, said interspace being in turn connected to inlet and outlet conduits of the air-conditioning system and having its periphery closed with covering strips.

The double heat accumulating wall enables the absorption of the thermal energy arising in the interior of the rooms from the incident solar radiation entering through the transparent panes in the wall openings of the respective building. Actually, the thermal energy is absorbed by the heat accumulating wall consisting of the cavity plates that are made of polypropylene and filled with the selected phase change material. The cavities are arranged in a horizontal pattern, thus ensuring uniform stratification of the accumulation medium along the height of the wall. A significant advantage of the system consists in that it comprises a separate ventilation air circuit enabling an efficient recovery of the heat accumulation medium to occur in the nighttime. Thus, the system enables the thermal energy to be absorbed in the daytime and the accumulated energy to be removed in the nighttime and to create a comfortable ambience for the users of the interior rooms throughout the day. In the nighttime, the interior space is cooled through the absorption of the thermal energy by the phase change materials. The ventilation circuit is separated from the interior environment and so the neither the flow rate nor the temperature of the inlet air affect the thermal comfort of the users of the respective room.

The air is fed into the lower part of the heat accumulating wall and the system, which is made up of horizontal partitions, then ensures a uniform flow of the air along the entire surface area of the rear face of the accumulating wall. The upper part of the heat accumulating wall accommodates the outlet orifice for the vent air. The complete system works autonomously and the temperature of the inlet air is controlled in accordance with the range of the solidification temperatures of the heat accumulation media used. The ventilation circuit is connected to the air-conditioning unit that enables to control the flow rate of the air inside the interspace of the double wall. The air-conditioning unit is supplemented with the cooling unit that enables to adjust the inlet temperature of the air fed into the ventilated interspace, where necessary. The latter measure slightly decreases the energy efficiency of the system because the complete solution contemplates the use of a machine-aided cooling circuit for the inlet air. Nevertheless, such cooling circuit may take advantage of the less expensive electricity during out-of-peak periods.

In a preferred embodiment, the air-conditioning unit is equipped with means for adjusting the temperature of inlet air.

In another preferred embodiment, the cavities of the cavity plate constituting the cavity wall are arranged in a horizontal pattern. This arrangement eliminates the segregation of the individual constituents of the phase change material used, thus preventing the plates from buckling.

In still another preferred embodiment, the load-carrying profiles are formed as U-profiles.

In yet another preferred embodiment, the reflective foil is made of aluminum.

### Exemplary embodiment of the invention

Figs. 1 and 2 show the sheet-like assembly consisting of the modules 1, 1a, 1b according to the invention. Before giving insight into the above assembly as a whole, it will be useful to describe the module 1a as shown in Fig. 3, considering it to be the representative module according to the invention.

It is apparent that the module 1a has a square area with the dimensions of e.g. 1000 x 1000 mm. The module comprises the box-like casing 2 that is most concisely shown in Fig. 4.
Fig. 4 clearly shows that the casing 2 consists of the rear wall 3, the side wall 4 and the flange 5. The flange 5, which extends along the whole top periphery of the casing 2, in turn supports the cavity plate 6 arranged thereon. The casing 2 is made of polypropylene that is easily weldable. Thus it is possible to contemplate various dimensioning schemes based on individual requirements. The cavity plate 6 is also made of polypropylene having the thickness of 8 mm and its cavities 6a are filled with a phase change material (PCM).

The sheet-like assembly shown in Figs. 1 and 2 consists of the lower module 1, the intermediate module 1a and the upper module 1b. It is obvious that the modules may be arranged to form such sheet-like assemblies or complete walls in that the casing 2 of the lower module 1, as shown in Fig. 1, is left open in its top portion and the subsequent module 1a, which in turn has its casing 2 left open in its lowermost portion, is mounted onto the top of the first module. The open end portions of both the modules are then adapted to fit together. The above arrangement is schematically shown in Fig. 3. It is obvious that multiple intermediate modules 1a may be used where necessary.

In order to make the modules 1, 1a, 1b fit together, the casing 2 of each of them is provided with the boundary zone 7 in its lower portion and with the tapered jointing element forming the socket piece 8 in its upper portion, the latter fitting together with the open-ended boundary zone 7 of the subsequent intermediate module 1a. The assembly may comprise multiple intermediate modules 1a as described above. The terminating element of the assembly is formed by the upper module having a similar structural arrangement to that of the intermediate modules 1a, the only difference consisting in that the upper boundary zone of the latter is closed in its topmost portion and does not form a socket piece. Accordingly, the intermediate module 1a adjoining the lower module 1 is provided with the closed lower boundary zone 7a that, again, does not form a socket piece. It will be appreciated by those skilled in the art that other jointing elements than the above described socket pieces may be also arranged between the individual modules.

The rear wall 3 and the side wall 4, together with the inner wall 9 of the cavity plate 6, form the air duct 10 through which the cooling air can pass. The air duct 10 is connected with the lower outlet branch 11 and with the upper outlet branch 12 that are associated with the lower and upper modules respectively. The outlet branches 11, 12 are led out of the room, i.e. beyond the external wall of the same. For this reason, there are no elaborate outlines of the outlet branches shown in Fig. 1.

Consequently, the modules are positioned in that their rear walls 3 abut against an existing structural wall so that their cavity plates 6 are facing the interior of the respective room. All the modules 1, 1a, 1b or the complete assembly 2 may be arranged in a hidden manner, e.g. imbedded into a suitable building material, such as plasterboard, or covered by a wallpaper.

As seen in Fig. 4, the cavity plate 6 is provided with a silicone sealing strip 13 extending along the side of the same, where the cavities (6a) have their open ends, and adjoining to the flange (5). A similar sealing strip is arranged on the opposite side of the cavity plate where, however, the installation thereof has to be preceded by the step of filling the cavities 6a with a phase change material. In such a step, the cavities 6a are not completely filled with a PCM so that the material can expand when being fused.

Fig. 5 shows the detail of the jointing area between, e.g., the lower module 1 and the intermediate module 1a. The sketch clearly illustrates the socket piece 8 of the lower module 1 with the open-ended lowermost portion of the casing 2 of the intermediate module 1a slid thereon.

Fig. 6 shows the detail of the outlet branch 12 protruding from the rear wall 3 of the upper module 1b.

Fig. 7 shows the schematic sectional view of the lower module 1 including the lower outlet branch 11, Fig. 8 shows the schematic sectional view of the intermediate module 1a of Fig. 3 and Fig. 9 shows the schematic sectional view of the upper module 1b of the assembly shown in Fig. 1, including the upper outlet branch 12. The outlet branch 11 of the lower module 1 is connected to a lower conduit (not shown), the upper module 1b being accordingly connected to an upper conduit. Both the above mentioned conduits ale led out of the room.

As mentioned hereinbefore, the Figs. 1 and 2 show the simplest embodiment of invention wherein the sheet-like assembly consists of the lower module 1, the intermediate module 1a and the upper module 1b. The intermediate module 1a is provided with simple bayonet-type jointing elements in its lowermost and uppermost portions. The individual sheet-like assemblies may be arranged side-by-side and the number of the modules used may vary according to the shape of the structural wall of the respective building. It will be appreciated by those skilled in the art that other jointing elements than the above described bayonet-type ones may be also arranged between the individual modules.

It is important that cavities 6a of the cavity plate 6 filled with the phase change material are separated from each other in order to prevent the molten material from heaping in the lower portion of the module and causing the casing to bulge, which is the known problem in the prior art.

The significant advantage of the modules according to the invention consists in the possibility of the night-time activation of the phase change material by cooling the interspace comprising the air duct 10. In the daytime, the thermal energy extracted from the interior of the room is accumulated in the accumulation module. In the nighttime the accumulated thermal energy may be removed from the module and led into the interior of the room through the ventilated interspace. This results in significant savings due to the reduced consumption of the expensive electrical energy, which would be otherwise necessary for machine-aided cooling of the interior spaces in the daytime, as well as due to the use of the less expensive out-of-peak electrical energy for ensuring the mechanical ventilation of the interspace of the module when the accumulated thermal energy is removed from the same in the nighttime.

Another advantage consists in the usability of the thermal energy accumulated in the heat accumulation layer for maintaining an appropriate climate in the interior spaces during the nighttime. In this case, when the ambient air temperatures considerably drop in the nighttime, particularly during transition seasons (spring, autumn), the inlet and outlet orifices are automatically closed and the air gap acts as a heat insulation layer causing the accumulated thermal energy to be radiated back into the interior of the room. In this manner, it is possible to shorten the heating season and to make use of the passive solar gains accumulated in the phase change material during the daytime.

Another advantage worth mentioning is the good thermal conductivity of the material of the casing containing the heat accumulation medium, the most preferred material being a thin cellular polypropylene plate. It is advisable to provide the surface of such plates with suitable paint or with a thin wallpaper in order not to reduce the values of the thermal conductivity and of the rate of heat transfer between the environment and the heat accumulation medium.

The compact module according to the invention, which directly accumulates the thermal energy extracted form the interior spaces of buildings, can be easily installed in the rooms where there is a risk of overheating and heat discomfort during summer seasons.

The purpose of the module is to accumulate the heat extracted from the rooms, where there are high solar gains during the summer season, in order to reduce the heat load in such rooms in the daytime. The fusion point of the phase change material (PCM) used ranges between 22 and 28 °C

The functional principle consists in the accumulation of the excessive day-time thermal gains into the accumulation layer formed by a phase change material enclosed in the cavity plate 6. The ventilated interspace 10 formed by an air gap enables an intensive air circulation removing the accumulated thermal energy in the nighttime. The ventilation is supported by a mechanically independent device that is not incorporated in the module. Nevertheless, an integrated arrangement may be also contemplated.

The design of the entire structure is based on the use of recycled polypropylene plates. The individual modules 1, 1a and 1b are composed of welded polypropylene plates having 4 mm in thickness and provided with reinforcing ribs for achieving sufficient stiffness. The base module having the dimensions of 1000 x 1000 mm is provided with inlet and outlet orifices arranged in the lowermost and topmost portions of its rear side respectively, the orifices acting as connecting elements for ventilation conduits. Since the module is made of a weldable plastic material, it is possible to contemplate various dimensioning schemes based on individual requirements.

Fig. 10 shows the double wall 17 connected to the air-conditioning unit 18. The front face of the double wall consists of the cavity wall 19 based on phase change materials and the load-carrying rear wall 20 is made of a common building material. The double wall 17 and the air-conditioning unit 18 are interconnected by the inlet conduit 21 and the outlet conduit 22. The interspace formed between the cavity wall 19 and the load-carrying rear wall 20 contains partitions 25 arranged in a stacked manner, thus creating the path 26 for the uniform flow of the vent air through the interspace 24. The direction of the air flow is indicated by arrows. The air-conditioning unit 18 is provided with the inlet 29 and outlet 30 air ducts on its opposite side. In a preferred embodiment, the air-conditioning unit is equipped with means for adjusting the temperature of inlet air.

Fig. 11 shows the detailed arrangement of the cavity wall 19 based on phase change materials and the load-carrying rear wall 20 in the sectional view. As clearly seen, the cavity wall is attached to the load-carrying rear wall 20 by means of the U-profiles 27, the load-carrying rear wall 20 being additionally provided with the reflective foil 28 having aluminum surface to eliminate the intrusion of vent air into the building structure.

Fig. 12 shows a front view of a panel consisting of the cavity wall 19. The cavity wall 19 is made of polypropylene having the thickness of 8 mm and its cavities 23 are filled with a phase change material (PCM). As seen in Fig. 13 showing a detail of the cavity wall, the cavities 23, which are preferably arranged in the horizontal position, are not completely filled a PCM so that the material can expand when being fused. The phase change material contained in the cavities is enclosed by a silicone sealing lip covered by a U-shaped plastic strip. After being installed, the complete assembly is secured with steel bolts.

The accumulation cavity wall 19 is directly exposed to the interior environment, thus enabling an efficient heat transfer between the latter and the accumulation medium. The cavity wall 19 forming the accumulation core of the assembly and the load carrying structure of the same are separated by the interspace 24 formed as an air gap.

The lowermost portion of the ventilation interspace accommodates the inlet branch for the lower conduit 21. The inlet conduit has rectangular cross-section and may be built into the floor structure of the respective room. The uppermost portion of the ventilation interspace accommodates the outlet branch for the upper conduit. The latter has rectangular cross-section and may be built into the suspended ceiling structure of the respective room. The air, which is aspirated into the outlet conduit 22, is led away from the system to the ambient environment of the building by means of an exhaust fan integrated in the air-conditioning unit 18. The inlet air is aspirated from the roof space through a machine-based cooling unit which ensures an efficient removal of the accumulated thermal energy from the accumulation medium contained in the cavity wall 19 in the nighttime, even during warmer seasons.

It will be possible to increase the overall energy efficiency of the entire system, if the air is not aspirated above the roof level but, e.g., through a ground heat exchanger where the temperature of the inlet air is decreased through the heat exchange between the flowing air and the soil.

## Claims

1. Heat accumulation module based on phase change materials, comprising the casing (2), **characterized in that** the casing (2) consists from the rear wall (3), the side wall (4) and the flange (5), the latter carrying the cavity plate (6) arranged thereon in a fixed position, thus creating the air duct (10) extending between the rear wall (3) of the casing (2) and the inner wall (9) of the cavity plate (6), and **in that** the cavity plate (6) is provided with a silicone sealing strip (13) extending along the side of the cavity plate (6), where the cavities (6a) of the same have their open ends, and adjoining to the flange (5), the cavities (6a) of the cavity plate (6) being filled with a phase change material.

2. Modular assembly consisting of the heat accumulation modules according to claim 1, **characterized in that** it includes the lower module (1), at least one intermediate module (1a) and the upper module (1b), the lower module being provided with the lower outlet branch (11) and the upper module (1b) being provided with the upper outlet branch (12), the conduits connected to the outlet branches (11, 12) being led out of the room, the at least one intermediate module (1a) having both the top and the bottom side of its casing (2) open, the lower module (1) having only the top side of its casing (2) open and the upper module (1b) having only the bottom side of its casing (2) open, the boundary zone of the jointing area of one of the modules (1, 1a, 1b) being adapted to form the coupling element for attaching a subsequent module and the air ducts (10) of the modules (1,1a,1b) being interconnected.

3. Modular assembly consisting of the heat accumulation modules according to claim 2, **characterized in that** the coupling element is designed in the form of the socket piece (8).

4. *Double heat accumulating wall, **characterized in that** its rear wall is designed in the form of the load-carrying wall (20) and its front face consists of the cavity wall (19) having its cavities* (23) *filled with* a *phase change material, the rear load-carrying wall (20) being on its side facing to the cavity wall (19) provided with the reflective foil* (28) *eliminating the intrusion of vent air into the building structure, the walls (19, 20) being separated by load-carrying profiles (27) and partitions (25) arranged between the former and creating the path* (26) *for the uniform flow of vent air through the interspace (24) of the double wall, the interspace (24) being in turn connected to inlet and outlet conduits (21, 22) of the air-conditioning system (18) and having its periphery closed with covering strips.*

5. *Double heat accumulating wall according to claim 4, **characterized in that** the air-conditioning system (18) is equipped with means for adjusting the temperature of inlet air.*

6. *Double heat accumulating wall according to claim 4, **characterized in that** the cavities* (23) *of the cavity plate constituting the cavity wall (19) are arranged in a horizontal pattern.*

7. *Double heat accumulating wall according to claim 4, **characterized in that** the load-carrying profiles (27) are formed* as *U-profiles.*

8. *Double heat accumulating wall according to claim 4, **characterized in that** the reflective foil (28) is made of aluminum.*
